# EUROPÄISCHE PATENTSCHRIFT

(11) **EP 4 589 939 B1**
(45) Veröffentlichungstag und Bekanntmachung des Hinweises auf die Patenterteilung: **12.08.2026**
(21) Anmeldenummer: 24152679.7
(22) Anmeldetag: 18.01.2024
(51) Int. Cl.: H04N 1/60, H04N 23/88, G06T 7/90, H04N 23/84

(54) **VERFAHREN ZUM BEREITSTELLEN EINER FARBKORREKTUR FÜR EINEN SPEZIFISCHEN KAMERASENSOR**
METHOD FOR PROVIDING A COLOR CORRECTION FOR A SPECIFIC CAMERA SENSOR
PROCÉDÉ DE FOURNITURE D'UNE CORRECTION DE COULEUR POUR UN CAPTEUR DE CAMÉRA SPÉCIFIQUE

(43) Veröffentlichungstag der Anmeldung: 23.07.2025
(73) Patentinhaber: Robert Bosch GmbH, 70442 Stuttgart (DE)
(72) Erfinder: Tachici, Andrei-Alexandru, Cluj-Napoca (RO)

(56) Entgegenhaltungen:
- EP-A1- 4 261 771
- US-A1- 2012 099 788
- US-A1- 2013 093 915
- US-A1- 2019 114 752

## Beschreibung

Die Erfindung betrifft ein Verfahren zum Bereitstellen einer Farbkorrektur für einen spezifischen Kamerasensor. Ferner betrifft die Erfindung ein Computerprogramm, eine Vorrichtung sowie ein Speichermedium zu diesem Zweck.

### Stand der Technik

Eine Farbkorrekturmatrix (englisch: "Color Correction Matrix", CCM) ist ein Werkzeug in der digitalen Bildverarbeitung, das zur Korrektur und Anpassung der Farben in digitalen Bildern verwendet wird. Ihr Hauptzweck ist es, die Farbwiedergabe eines Bildsensors zu optimieren, indem sie die Farbabweichungen korrigiert, die durch den Sensor und das Objektiv des Aufnahmegeräts entstehen können.

Die Farbkorrekturmatrix umfasst eine Matrix von Werten, die auf die Farbkanäle eines Bildes angewendet werden, um die Farben zu korrigieren. Typischerweise beinhaltet sie eine 3x3-Matrix, wobei jede Zeile der Matrix den Rot-, Grün- und Blaukanal des Bildes repräsentiert. Durch Multiplikation der Farbwerte eines Pixels mit dieser Matrix können Farbstiche korrigiert, die Farbsättigung angepasst und die allgemeine Farbbalance verbessert werden.

Im Stand der Technik werden beispielsweise gewichtete Summen verwendet, um die Farbkorrekturmatrix zu definieren und in der Praxis werden ferner meist Look-Up-Tabellen zur Rekonstruktion des Bildes verwendet. Auch werden oft weitere Informationen über einen vorliegenden Kamerasensor oder eine spezielle vorliegende Hardware benötigt, welche beispielsweise auf Basis einer Messung der Wellenlänge eines aufgenommenen Bildes parallel zum Kamerasensor ermittelt werden müssen.

Das Dokument US20090268044A1 beschreibt beispielsweise ein Verfahren zur Einstellung der Pixelfarben eines Bildes. Nach einem Weißabgleich der Rohbilddaten des digitalen Bildes werden dabei die weißabgeglichenen Bilddaten an ein Farbkorrekturmodul als Farbvektoren in einem Farbraum zur Farbanpassung mit Hilfe einer Farbkorrekturmatrix weitergeleitet.

Das Dokument US20110019913A1 offenbart ein Verfahren zur Erzeugung einer Farbkorrekturmatrix (CCM) für einen Bildsensor. Dabei werden Quanteneffizienzspektren (QE) von Pixeln des Bildsensors gemessen, die von einer physikalischen Lichtquelle beleuchtet werden. Anschließend werden Farbwerte des Bildsensors und Farbwerte in einem vorbestimmten Farbraum entsprechend den QE-Spektren und vorbestimmten Referenzdaten, die für die Ableitung der Farbwerte wesentlich sind, bestimmt. Schließlich wird die Farbkorrekturmatrix für den Bildsensor erzeugt, indem ein Anpassungsalgorithmus auf die Farbwerte des Bildsensors und die Farbwerte in dem vorgegebenen Farbraum angewendet wird.

US 2012/099788 A1 beschreibt ein Verfahren und eine Vorrichtung zur Auswahl einer Farbpalette. US 2019/114752 A1 beschreibt ein Verfahren zur Reduzierung der violetten Säume in von einer Kamera aufgenommenen Bildern. US 2013/093915 A1 offenbart ein Verfahren zur verbesserten Genauigkeit bei einer Bestimmung eines Farbkorrekturmatrixkoeffizienten (CCM) auf der Grundlage eines geschätzten Weißpunktes.

### Offenbarung der Erfindung

Gegenstand der Erfindung ist ein Verfahren mit den Merkmalen des Anspruchs 1, ein Computerprogramm mit den Merkmalen des Anspruchs 7, eine Vorrichtung mit den Merkmalen des Anspruchs 8 sowie ein computerlesbares Speichermedium mit den Merkmalen des Anspruchs 9. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere Verfahren zum Bereitstellen einer Farbkorrektur für einen spezifischen Kamerasensor, umfassend die folgenden Schritte, wobei die Schritte wiederholt und/oder nacheinander durchgeführt werden können. Der Kamerasensor erfasst vorzugsweise Bilder in einem für einen Menschen sichtbaren Bereich. Mit dem Ausdruck "spezifisch" ist hinsichtlich des Kamerasensors beispielsweise ein bestimmter Typ oder ein bestimmtes Modell bezeichnet.

In einem ersten Schritt wird vorzugsweise ein Referenzbild bereitgestellt, wobei das Referenzbild aus einer Erfassung des spezifischen Kamerasensors resultiert. Es ist auch denkbar, dass wenigstens zwei Referenzbilder bereitgestellt werden. Das Referenzbild kann mit Hilfe eines FPGA-basierten Framegrabbers erfasst werden. Die Daten, d.h. insbesondere das wenigstens eine Referenzbild, können in Echtzeit mit 30 FPS beispielsweise unter Verwendung von RAW16 CSI-Kodierung bereitgestellt werden, um vorteilhaft eine Echtzeit-Anwendung des Verfahrens gemäß der Erfindung oder einer Anwendung der bereitgestellten Farbkorrektur zu ermöglichen. Ferner kann im Rahmen der vorliegenden Erfindung eine auf einer Compute Unified Device Architecture (CUDA) basierende Anwendung einen Bildsignalprozessor (ISP) und eine Bildrekonstruktion (IMR) anwenden.

In einem weiteren Schritt wird vorzugsweise eine Farbinterpolierung des Referenzbildes durchgeführt, um ein interpoliertes Bild bereitzustellen. Die Farbinterpolierung kann auch mit dem englischen Begriff Demosaicing oder auch Debayering bezeichnet werden. Die Farbinterpolierung, bzw. das Demosaicing oder auch Debayering, ist ein Verfahren, bei dem aus einem Bayer-Muster des Referenzbildes, welches insbesondere nur Informationen über die Helligkeit enthält, ein vollständiges Farbbild generiert werden kann. Insbesondere wird dabei aus rohen, farbgefilterten Daten ein vollfarbiges Bild erstellt. Dabei kann für jedes Pixel eine Farbe errechnet werden, indem Informationen aus den benachbarten Pixeln interpoliert werden. Beispielsweise wird für ein rotes Pixel der Grün- und Blauwert aus den umliegenden Pixeln geschätzt, um einen vollständigen RGB-Farbwert zu erhalten.

In einem weiteren Schritt wird vorzugsweise wenigstens ein jeweiliger zu untersuchender Bereich für die Farben Rot, Grün und Blau in dem interpolierten Bild bestimmt. Rot ist insbesondere eine Farbe mit einer Wellenlänge von etwa 620-750 Nanometern, Grün mit einer Wellenlänge von etwa 495-570 Nanometern und Blau mit einer Wellenlänge von etwa 450-495 Nanometern. Das Bestimmen erfolgt manuell, durch einen Benutzer. Alternativ kann das Bestimmen auch automatisiert, beispielsweise auf Basis einer Objekt- oder Mustererkennung, erfolgen.

In einem weiteren Schritt wird vorzugsweise ein Mittelwert von Farbwerten in jedem bestimmten zu untersuchenden Bereich gebildet, um eine jeweilige resultierende Durchschnittsfarbe zu erhalten. Dadurch können vorteilhaft ungleichmäßige Farbverteilungen in dem Referenzbild, beispielsweise durch Schatten oder Unebenheiten auf Oberflächen, ausgeglichen werden.

In einem weiteren Schritt wird vorzugsweise eine jeweilige Referenzfarbe zu jeder resultierenden Durchschnittsfarbe zugewiesen, wobei die Referenzfarben zumindest die Farben Rot, Grün und Blau umfassen. Vereinfacht ausgedrückt, wird beispielsweise einer resultierenden Durchschnittsfarbe, welche im Wesentlichen der Farbe Rot entspricht oder dieser entsprechen soll, die Referenzfarbe Rot zugewiesen. Dasselbe kann für die Farben Grün und Blau durchgeführt werden.

In einem weiteren Schritt wird vorzugsweise eine Farbkorrekturmatrix auf Basis von Farbwerten des Referenzbildes generiert. Die Farbwerte des Referenzbildes können gemessene Farbkanalwerte des Referenzbildes sein. Die Farbkorrekturmatrix (englisch: "Color Correction Matrix", CCM) wird insbesondere in Form von neun Variablen generiert, wobei für eine jeweilige Farbe, d.h. insbesondere Rot, Grün und Blau, drei Variablen vorgesehen sind. Die Farbkorrekturmatrix umfasst somit vorzugsweise eine 3x3-Matrix, wobei jede Zeile der Matrix den Rot-, Grün- und Blaukanal des Bildes repräsentiert.

In einem weiteren Schritt wird vorzugsweise jeweils eine Zwischenvariable für die Farben Rot, Grün und Blau auf Basis der generierten Farbkorrekturmatrix berechnet, insbesondere auch auf Basis der Farbwerte des Referenzbildes. Dies kann beispielsweise im Sinne der nachstehenden Gleichungen durchgeführt werden. $R ′ = R * CCM \left[0\right] \left[0\right] + G * CCM \left[0\right] \left[1\right] + B * CCM \left[0\right] \left[2\right]$ $G ′ = G * CCM \left[1\right] \left[0\right] + G * CCM \left[1\right] \left[1\right] + B * CCM \left[1\right] \left[2\right]$ $B ′ = B * CCM \left[2\right] \left[0\right] + G * CCM \left[2\right] \left[1\right] + B * CCM \left[2\right] \left[2\right]$

Dabei sind R' G' B' insbesondere die Zwischenvariablen und R, G, B gemessene Farbkanalwerte des Referenzbildes. R, G und B stehen dabei jeweils für Rot, Grün und Blau.

In einem weiteren Schritt wird vorzugsweise eine jeweilige Differenz für die Farben Rot, Grün und Blau zwischen den Farbwerten des Referenzbildes und der jeweils berechneten Zwischenvariable minimiert, um die Farbkorrektur für den spezifischen Kamerasensor bereitzustellen. Dies ist beispielhaft anhand des nachstehenden Pseudo-Codes aufgezeigt, wobei die Variablen R_real, G_real und B_real jeweils die entsprechenden Farbwerte für Rot, Grün und Blau des Referenzbildes repräsentieren:
Minimieren(abs(R' - R_real))
Minimieren(abs(G' - G_real))
Minimieren(abs(B' - B_real))

Durch das Verfahren gemäß der vorliegenden Erfindung kann durch die bereitgestellte Farbkorrektur vorteilhaft eine Bildverarbeitung und damit beispielsweise eine Detektion von Objekten in den Bilder verbessert werden. Dies kann besonders im Rahmen einer Anwendung in einem Fahrzeug, insbesondere in einem zumindest teilautomatisieren Fahrzeug, vorteilhaft sein. Ein Bild, auf welches die bereitgestellte Farbkorrektur angewendet wurde, kann vorteilhaft verstärkt die von einem Menschen wahrgenommenen Farben aufweisen oder in anderen Worten, für einen Menschen visuell natürlicher wirken.

Es ist vorgesehen, dass das Verfahren ferner den folgenden Schritt umfasst:
- Rendern des interpolierten Bildes, um das Bestimmen (103) des wenigstens einen jeweiligen zu untersuchenden Bereiches auf Basis des gerenderten interpolierten Bildes durchzuführen.

Durch das Rendern des interpolierten Bildes kann das Bestimmen der zu untersuchenden Bereiche in dem interpolierten Bild vereinfacht werden, wenn ein manuelles Bestimmen durch einen Benutzer vorgesehen ist.

Zudem ist denkbar, dass das Zuweisen (105) den folgenden Schritt umfasst:
- Erstellen einer Tabelle, wobei die Tabelle eine jeweilige Zuweisung der Referenzfarben zu den resultierenden Durchschnittsfarben umfasst.

Durch die Tabelle kann vorteilhaft eine Datenbasis für die weiteren Schritte des Verfahrens bereitgestellt werden, welche je nach Anwendungsfall modifiziert werden kann.

In einem weiteren Beispiel wird das Generieren der Farbkorrekturmatrix unter Verwendung eines nicht-ganzzahligen Gleichungsauflösers durchgeführt, wobei für jede Farbe drei Variablen generiert werden. Die Verwendung eines nicht-ganzzahligen Gleichungsauflösers kann zu einer schnelleren und effizienteren Generierung der Farbkorrekturmatrix führen, da weniger Iterationen erforderlich sein können.

Der nicht-ganzzahlige Gleichungsauflöser kann beispielsweise ein Advanced Process Optimizer oder ein Interior Point Optimizer sein.

Advanced Process Optimizer (APOPT), ist insbesondere ein Optimierungsalgorithmus, der für die Lösung von gemischt-ganzzahligen nichtlinearen Programmierungsproblemen (MINLP) verwendet werden kann. Die Funktionsweise von APOPT lässt sich wie folgt zusammenfassen: APOPT eignet sich beispielsweise für Probleme, die sowohl kontinuierliche als auch diskrete Entscheidungsvariablen beinhalten. APOPT verwendet insbesondere einen Branch and Bound Algorithmus. Dies ist insbesondere eine Methode zur Lösung von Optimierungsproblemen mit Ganzzahligkeitsbedingungen. Der Algorithmus arbeitet insbesondere, indem er den Lösungsraum systematisch in kleinere Teilbereiche (Branches) unterteilt und diese einzeln untersucht. Durch das Setzen von Obergrenzen (Bounds) für den optimalen Wert können nicht vielversprechende Bereiche des Lösungsraums ausgeschlossen werden, um die Suche zu beschleunigen. Für die kontinuierlichen Variablen des Problems nutzt APOPT vorzugsweise Methoden der nichtlinearen Programmierung, um optimale oder nahezu optimale Lösungen zu finden. Dies beinhaltet beispielsweise die Anwendung von Techniken wie Gradientenmethoden oder Interior-Point-Methoden. Für die diskreten Variablen berücksichtigt APOPT insbesondere Ganzzahligkeitsbedingungen, um sicherzustellen, dass die endgültige Lösung den Anforderungen des Problems entspricht. Der Algorithmus testet beispielsweise verschiedene Kombinationen von ganzzahligen Werten und bewertet ihre Auswirkungen auf das Gesamtoptimum. Ein Aspekt bei der Verwendung von APOPT ist eine Unterscheidung zwischen globalen und lokalen Optima. APOPT strebt insbesondere an, das globale Optimum zu finden, kann aber auch lokale Optima liefern, abhängig von der Komplexität des Problems und den spezifischen Parametereinstellungen.

Interior Point Optimizer (IPOPT) ist insbesondere ein numerischer Optimierungsalgorithmus zur Lösung von großskaligen nichtlinearen Programmierungsproblemen (NLP). IPOPT ist insbesondere spezialisiert auf die Lösung von nichtlinearen Programmierungsproblemen. Diese Probleme umfassen beispielsweise eine Zielfunktion, die minimiert oder maximiert werden soll, unter Einhaltung von nichtlinearen Gleichungen und Ungleichungen als Nebenbedingungen. IPOPT verwendet vorzugsweise den Interior-Point-Ansatz. Dieser Ansatz unterscheidet sich beispielsweise von Randpunktmethoden (wie Simplex bei linearen Problemen) dadurch, dass er im Lösungsprozess im Inneren des zulässigen Bereichs bleibt, anstatt entlang der Grenzen zu navigieren. Dies ermöglicht oft eine effizientere Durchquerung des Lösungsraums. Der Kern von IPOPT ist insbesondere eine iterative Strategie. In jedem Iterationsschritt kann eine Näherungslösung erzeugt werden, basierend auf der aktuellen Schätzung des Optimums. Diese Näherungslösung kann dann verwendet werden, um die nächste Schätzung zu berechnen. Zur Bestimmung der Richtung und Größe der nächsten Schritte löst IPOPT vorzugsweise nichtlineare Gleichungssysteme. Dies kann mit Hilfe von Techniken wie der Newton-Methode und der linearen Programmierung durchgeführt werden. Der Algorithmus iteriert vorzugsweise, bis eine Lösung gefunden wird, die innerhalb eines vorgegebenen Toleranzbereichs liegt. Das bedeutet, die Änderungen zwischen aufeinanderfolgenden Iterationen sind insbesondere klein genug, um darauf zu schließen, dass die Lösung nahe am Optimum liegt.

Zudem ist denkbar, dass der nicht-ganzzahlige Gleichungsauflöser so konfiguriert ist, dass er in einem Modus für Nichtlineare Programmierung eine Breitensuche durchführt. Die Nichtlineare Programmierung betrifft insbesondere die Lösung von Problemen, bei denen wenigstens eine Zielfunktion und/oder wenigstens eine Beschränkung eine nichtlineare Funktion ist. Die Breitensuche bezieht sich insbesondere auf eine spezielle Art der Durchsuchung des Lösungsraums, beispielsweise bei Optimierungsproblemen, die diskrete Entscheidungen (wie ganzzahlige Variablen) beinhalten. Die Breitensuche (englisch: "Breadth first") ist insbesondere eine Strategie, bei der zuerst alle Verzweigungen auf einer Ebene des Entscheidungsbaums untersucht werden, bevor zu den nächsten Ebenen übergegangen wird. Dies steht beispielsweise im Gegensatz zur Tiefensuche (englisch: "Depth first") Strategie, bei der so tief wie möglich in einen Ast des Baumes eingedrungen wird, bevor zu anderen Ästen übergegangen wird.

In einem weiteren Beispiel umfasst das Verfahren ferner den folgenden Schritt:
- Bestimmen der Farbwerte des Referenzbildes auf Basis einer Analyse des Referenzbildes.

Dies kann beispielsweise durch eine pixelweise Analyse, eine Histogramm-Analyse oder eine automatisierte Farberkennung, zum Beispiel mittels maschinellem Lernen, durchgeführt werden.

Es ist möglich, dass das erfindungsgemäße Verfahren bei einem Fahrzeug zum Einsatz kommt, insbesondere für einen spezifischen Kamerasensor wenigstens einer Kamera des Fahrzeugs. Das Fahrzeug kann bspw. als ein Kraftfahrzeug und/oder Personenkraftfahrzeug und/oder zumindest teilautomatisiertes Fahrzeug ausgebildet sein. Das Fahrzeug kann eine Fahrzeugeinrichtung, bspw. zur Bereitstellung einer autonomen Fahrfunktion und/oder ein Fahrerassistenzsystem aufweisen. Die Fahrzeugeinrichtung kann dazu ausgeführt sein, das Fahrzeug zumindest teilweise automatisch zu steuern und/oder zu beschleunigen und/oder abzubremsen und/oder zu lenken.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

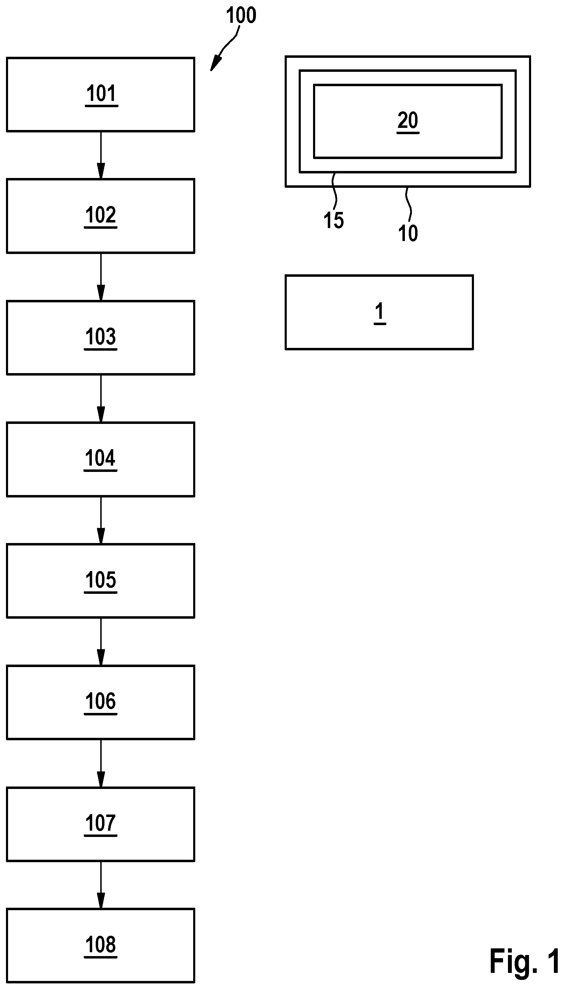

- Fig. 1: eine schematische Visualisierung eines Verfahrens, einer Vorrichtung, eines Speichermediums sowie eines Computerprogramms gemäß Ausführungsbeispielen der Erfindung.

In Fig. 1 sind ein Verfahren 100, ein Kamerasensor 1, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zum Bereitstellen einer Farbkorrektur für einen spezifischen Kamerasensor 1. In einem ersten Schritt 101 wird ein Referenzbild bereitgestellt, wobei das Referenzbild aus einer Erfassung des spezifischen Kamerasensors 1 resultiert. In einem zweiten Schritt 102 wird eine Farbinterpolierung des Referenzbildes durchgeführt, um ein interpoliertes Bild bereitzustellen. In einem dritten Schritt 103 wird wenigstens ein jeweiliger zu untersuchender Bereich für die Farben Rot, Grün und Blau in dem interpolierten Bild bestimmt. In einem vierten Schritt 104 wird ein Mittelwert von Farbwerten in jedem bestimmten zu untersuchenden Bereich gebildet, um eine jeweilige resultierende Durchschnittsfarbe zu erhalten. In einem fünften Schritt 105 wird eine jeweilige Referenzfarbe zu jeder resultierenden Durchschnittsfarbe zugewiesen, wobei die Referenzfarben zumindest die Farben Rot, Grün und Blau umfassen. In einem sechsten Schritt 106 wird eine Farbkorrekturmatrix auf Basis von Farbwerten des Referenzbildes generiert. In einem siebten Schritt 107 wird jeweils eine Zwischenvariable für die Farben Rot, Grün und Blau auf Basis der generierten Farbkorrekturmatrix berechnet. In einem achten Schritt 108 wird eine jeweilige Differenz für die Farben Rot, Grün und Blau zwischen den Farbwerten des Referenzbildes und der jeweils berechneten Zwischenvariable minimiert, um die Farbkorrektur für den spezifischen Kamerasensor 1 bereitzustellen.

Nach einem Debayering-Schritt im Bildsignalprozessor kann ein Bild noch Rohwerte für die RGB-Dioden umfassen. Diese Werte stellen die Reaktion von Fotodioden auf eine bestimmte Wellenlänge dar und sind insbesondere nicht geeignet, um beim Rendern des Bildes als richtige Farben interpretiert zu werden.

Daher wird gemäß Ausführungsbeispielen der Erfindung das nachstehende Gleichungssystem mit 9 Variablen gelöst. Die Farbkorrekturmatrix (englisch: "Color Correction Matrix", CCM) kann vorteilhaft die Ausgabe jeder Farbe im rohen RGB-Bild kombinieren, da jede Fotodiode mehr oder weniger auf das gesamte sichtbare Spektrum reagiert. $R ′ = R * CCM \left[0\right] \left[0\right] + G * CCM \left[0\right] \left[1\right] + B * CCM \left[0\right] \left[2\right]$ $G ′ = G * CCM \left[1\right] \left[0\right] + G * CCM \left[1\right] \left[1\right] + B * CCM \left[1\right] \left[2\right]$ $B ′ = B * CCM \left[2\right] \left[0\right] + G * CCM \left[2\right] \left[1\right] + B * CCM \left[2\right] \left[2\right]$

Bei korrekter Ausführung kann das ausgegebene Bild, d.h. ein Bild, auf welches die gemäß Ausführungsbeispielen der Erfindung bereitgestellte Farbkorrektur angewendet wurde, vorteilhaft den von einem Menschen wahrgenommenen Farben ähneln.

Das Referenzbild kann mit Hilfe eines FPGA-basierten Framegrabbers erfasst werden. Die Daten, d.h. insbesondere das wenigstens eine Referenzbild, können in Echtzeit mit 30 FPS beispielsweise unter Verwendung von RAW16 CSI-Kodierung bereitgestellt werden. Ferner kann eine auf einer Compute Unified Device Architecture (CUDA) basierende Anwendung den Bildsignalprozessor (ISP) und die Bildrekonstruktion (IMR) anwenden. Die Bildrekonstruktion kann unmittelbar nach dem Debayering-Schritt erfolgen. Auf diese Weise können die zu untersuchenden Bereiche (englisch: "regions of interest", ROls) im Referenzbild leichter bestimmt oder ausgewählt werden, insbesondere im Falle einer manuellen Auswahl, beispielsweise durch einen Benutzer.

Gemäß einem Ausführungsbeispiel der Erfindung können die folgenden Schritte durchgeführt werden, um die Farbkorrekturmatrix zu erhalten und anzuwenden. In einem ersten Schritt kann ein Referenzbild bereitgestellt werden, welches aus einer Erfassung des spezifischen Kamerasensors 1 resultieren kann. In einem zweiten Schritt kann ein Dekompandierungs- und/oder Interpolierungsschritt (englisch: "debayering step") auf das erfasste Referenzbild angewendet werden. In einem dritten Schritt kann eine Ausgabe des vorhergehenden Schrittes gerendert werden, so dass das erfasste Referenzbild visualisiert werden kann. In einem vierten Schritt kann für jede Farbe des erfassten Referenzbildes mindestens ein zu untersuchender Bereich (englisch: "region of interest", ROI) ausgewählt werden. In einem fünften Schritt kann eine Fläche in jedem zu untersuchenden Bereich gemittelt und eine daraus resultierende Durchschnittsfarbe für den jeweiligen zu untersuchenden Bereich ermittelt werden. In einem sechsten Schritt kann eine Tabelle mit einer gemessenen Farbe, d.h. der jeweils resultierenden Durchschnittsfarbe eines zu untersuchenden Bereiches, und einer entsprechenden Referenzfarbe erstellt werden. Jedem zu untersuchenden Bereich kann so eine entsprechende Referenzfarbe zugewiesen werden. In einem siebten Schritt können unter Verwendung eines Advanced Process OPTimizer (APOPT)- oder eines Interior Point OPTimizer (IPOPT)-Solvers, der so konfiguriert ist, dass er in einem Modus für Nichtlineare Programmierung (NLP) eine Breitensuche (englisch: "breadth first branching") durchführt, neun Variablen einer Farbkorrekturmatrix generiert werden. Für jede Farbe können ferner drei Zwischenvariablen in den Solver eingeführt werden. Die Verwendung von Zwischenvariablen kann hier vorteilhaft zur Konvergenz beitragen. Die sich aus dem vorstehenden siebten Schritt ergebenden Gleichungen werden nachstehen aufgezeigt: $R ′ = R * CCM \left[0\right] \left[0\right] + G * CCM \left[0\right] \left[1\right] + B * CCM \left[0\right] \left[2\right]$ $G ′ = G * CCM \left[1\right] \left[0\right] + G * CCM \left[1\right] \left[1\right] + B * CCM \left[1\right] \left[2\right]$ $B ′ = B * CCM \left[2\right] \left[0\right] + G * CCM \left[2\right] \left[1\right] + B * CCM \left[2\right] \left[2\right]$

Dabei sind R' G' B' die Zwischenvariablen im Solver und R, G, B die gemessenen Farbkanalwerte. R, G und B stehen dabei jeweils für rot, grün und blau.

In einem achten Schritt können Objektive anstelle von Gleichungen verwendet werden. Für jede Referenzfarbe können drei Objektive vorgegeben werden. Das Ziel besteht insbesondere jeweils darin, einen absoluten Wert einer Differenz zwischen dem gemessenen Farbkanal und dem angepassten Farbkanal, d.h. insbesondere der bestimmten Zwischenvariablen, zu minimieren. Dies ist beispielhaft anhand dem nachstehenden Pseudo-Code aufgezeigt:
Minimieren(abs(R' - R_real))
Minimieren(abs(G' - G_real))
Minimieren(abs(B' - B_real))

In einem neunten Schritt kann der Solver ausgeführt werden und eine Ausgabe visualisiert werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Bereitstellen einer Farbkorrektur für einen spezifischen Kamerasensor (1), umfassend die folgenden Schritte:
- Bereitstellen (101) eines Referenzbildes, wobei das Referenzbild aus einer Erfassung des spezifischen Kamerasensors (1) resultiert,
- Durchführen (102) einer Farbinterpolierung des Referenzbildes, um ein interpoliertes Bild bereitzustellen,
- Bestimmen (103) wenigstens eines jeweiligen zu untersuchenden Bereiches für die Farben Rot, Grün und Blau in dem interpolierten Bild, wobei ein manuelles Bestimmen durch einen Benutzer vorgesehen ist,
- Bilden (104) eines Mittelwertes von Farbwerten in jedem bestimmten zu untersuchenden Bereich, um eine jeweilige resultierende Durchschnittsfarbe zu erhalten,
- Zuweisen (105) einer jeweiligen Referenzfarbe zu jeder resultierenden Durchschnittsfarbe, wobei die Referenzfarben zumindest die Farben Rot, Grün und Blau umfassen,
- Generieren (106) einer Farbkorrekturmatrix auf Basis von Farbwerten des Referenzbildes,
- Berechnen (107) jeweils einer Zwischenvariable für die Farben Rot, Grün und Blau auf Basis der generierten Farbkorrekturmatrix,
- Minimieren (108) einer jeweiligen Differenz für die Farben Rot, Grün und Blau zwischen den Farbwerten des Referenzbildes und der jeweils berechneten Zwischenvariable, um die Farbkorrektur für den spezifischen Kamerasensor (1) bereitzustellen,
wobei das Verfahren (100) ferner den folgenden Schritt umfasst:
- Rendern des interpolierten Bildes, um das Bestimmen (103) des wenigstens einen jeweiligen zu untersuchenden Bereiches auf Basis des gerenderten interpolierten Bildes durchzuführen.

2. Verfahren (100) nach einem der vorhergehenden Ansprüche,
**dadurch gekennzeichnet,**
**dass** das Zuweisen (105) den folgenden Schritt umfasst:
- Erstellen einer Tabelle, wobei die Tabelle eine jeweilige Zuweisung der Referenzfarben zu den resultierenden Durchschnittsfarben umfasst.

3. Verfahren (100) nach einem der vorhergehenden Ansprüche,
**dadurch gekennzeichnet,**
**dass** das Generieren (106) der Farbkorrekturmatrix unter Verwendung eines nicht-ganzzahligen Gleichungsauflösers durchgeführt wird, wobei für jede Farbe drei Variablen generiert werden.

4. Verfahren (100) nach Anspruch 3,
**dadurch gekennzeichnet,**
**dass** der nicht-ganzzahlige Gleichungsauflöser ein Advanced Process Optimizer oder ein Interior Point Optimizer ist.

5. Verfahren (100) nach einem der Ansprüche 3 oder 4,
**dadurch gekennzeichnet,**
**dass** der nicht-ganzzahlige Gleichungsauflöser so konfiguriert ist, dass er in einem Modus für Nichtlineare Programmierung eine Breitensuche durchführt.

6. Verfahren (100) nach einem der vorhergehenden Ansprüche,
**dadurch gekennzeichnet,**
**dass** das Verfahren (100) ferner den folgenden Schritt umfasst:
- Bestimmen der Farbwerte des Referenzbildes auf Basis einer Analyse des Referenzbildes.

7. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

8. Vorrichtung (10) zur Datenverarbeitung, die eingerichtet ist, das Verfahren (100) nach einem der Ansprüche 1 bis 6 auszuführen.

9. Computerlesbares Speichermedium (15), umfassend Befehle, die bei der Ausführung durch einen Computer (10) diesen veranlassen, die Schritte des Verfahrens (100) nach einem der Ansprüche 1 bis 6 auszuführen.

## Claims

1. Method (100) for providing a colour correction for a specific camera sensor (1), comprising the following steps:
- providing (101) a reference image, wherein the reference image results from a capture by the specific camera sensor (1),
- performing (102) a colour interpolation of the reference image in order to provide an interpolated image,
- determining (103) at least one respective area to be examined for the colours of red, green and blue in the interpolated image, wherein manual determination by a user is provided,
- forming (104) an average value of colour values in each determined area to be examined in order to obtain a respective resulting average colour,
- assigning (105) a respective reference colour to each resulting average colour, wherein the reference colours comprise at least the colours of red, green and blue,
- generating (106) a colour correction matrix based on colour values of the reference image,
- calculating (107) in each case an intermediate variable for the colours of red, green and blue based on the generated colour correction matrix,
- minimizing (108) a respective difference for the colours of red, green and blue between the colour values of the reference image and the respectively calculated intermediate variable in order to provide the colour correction for the specific camera sensor (1),
wherein the method (100) also comprises the following step:
- rendering the interpolated image in order to determine (103) the at least one respective area to be examined based on the rendered interpolated image.

2. Method (100) according to one of the preceding claims,
**characterized**
**in that** the assignment (105) comprises the following step:
- creating a table, wherein the table includes a respective assignment of the reference colours to the resulting average colours.

3. Method (100) according to either of the preceding claims,
**characterized**
**in that** the colour correction matrix is generated (106) using a non-integer equation solver, wherein three variables are generated for each colour.

4. Method (100) according to Claim 3,
**characterized**
**in that** the non-integer equation solver is an Advanced Process Optimizer or an Interior Point Optimizer.

5. Method (100) according to either of Claims 3 and 4,
**characterized**
**in that** the non-integer equation solver is configured to perform a breadth-first search in a non-linear programming mode.

6. Method (100) according to one of the preceding claims,
**characterized**
**in that** the method (100) also comprises the following step:
- determining the colour values of the reference image based on an analysis of the reference image.

7. Computer program (20) comprising instructions that, when the computer program (20) is executed by a computer (10), cause said computer to carry out the method (100) according to one of the preceding claims.

8. Data processing device (10) configured to carry out the method (100) according to one of Claims 1 to 6.

9. Computer-readable storage medium (15) comprising instructions that, when executed by a computer (10), cause said computer to carry out the steps of the method (100) according to one of Claims 1 to 6.

## Revendications

1. Procédé (100) de fourniture d'une correction de couleur pour un capteur de caméra spécifique (1), comprenant les étapes suivantes :
- la fourniture (101) d'une image de référence, l'image de référence résultant d'une capture par le capteur de caméra spécifique (1),
- la réalisation (102) d'une interpolation de couleur de l'image de référence afin de fournir une image interpolée,
- la détermination (103) d'au moins une zone respective à examiner pour les couleurs rouge, verte et bleue dans l'image interpolée, une détermination manuelle par un utilisateur étant prévue,
- la formation (104) d'une valeur moyenne des valeurs de couleur dans chaque région spécifique à examiner afin d'obtenir une couleur moyenne résultante respective,
- l'affectation (105) d'une couleur de référence respective à chaque couleur moyenne résultante, les couleurs de référence comprenant au moins les couleurs rouge, verte et bleue,
- la génération (106) d'une matrice de correction de couleur à partir des valeurs de couleur de l'image de référence,
- le calcul (107) respectif d'une variable intermédiaire pour les couleurs rouge, verte et bleue sur la base de la matrice de correction de couleur générée,
- la minimisation (108) d'une différence respective pour les couleurs rouge, verte et bleue entre les valeurs de couleur de l'image de référence et la variable intermédiaire calculée respectivement afin de fournir la correction de couleur pour le capteur de caméra spécifique (1),
le procédé (100) comprenant en outre l'étape suivante :
- le rendu de l'image interpolée afin d'effectuer la détermination (103) d'au moins une région respective à examiner sur la base de l'image interpolée rendue.

2. Procédé (100) selon l'une des revendications précédentes,
**caractérisé en ce que**
l'affectation (105) comprend en outre l'étape suivante :
- la création d'un tableau, le tableau comprenant une affectation respective des couleurs de référence aux couleurs moyennes résultantes.

3. Procédé (100) selon l'une des revendications précédentes,
**caractérisé en ce que**
la génération (106) de la matrice de correction de couleur est effectuée à l'aide d'un résolveur d'équations non entières, trois variables étant générées pour chaque couleur.

4. Procédé (100) selon la revendication 3,
**caractérisé en ce que**
le résolveur d'équations non entières est un optimiseur de processus avancé ou un optimiseur de point intérieur.

5. Procédé (100) selon l'une des revendications 3 ou 4,
**caractérisé en ce que**
le résolveur d'équations non entières est configuré pour effectuer une recherche de largeur dans un mode de programmation non linéaire.

6. Procédé (100) selon l'une des revendications précédentes,
**caractérisé en ce que**
le procédé (100) comprend en outre l'étape suivante :
- la détermination des valeurs de couleur de l'image de référence à partir d'une analyse de l'image de référence.

7. Programme informatique (20), comprenant des instructions qui, lors de l'exécution du programme informatique (20) par un ordinateur (10), amènent celui-ci à mettre en œuvre le procédé (100) selon l'une des revendications précédentes.

8. Dispositif (10) de traitement de données, conçu pour mettre en œuvre le procédé (100) selon l'une des revendications 1 à 6.

9. Support de stockage lisible par ordinateur (15), comprenant des instructions qui, lorsqu'elles sont exécutées par un ordinateur (10), amènent celui-ci à exécuter les étapes du procédé (100) selon l'une des revendications 1 à 6.
